# EUROPÄISCHE PATENTSCHRIFT

(11) **EP 1 099 618 B1**
(45) Veröffentlichungstag und Bekanntmachung des Hinweises auf die Patenterteilung: **06.08.2003**
(21) Anmeldenummer: 01104005.2
(22) Anmeldetag: 12.05.1997
(51) Int. Cl.: B62D 65/00, B21D 39/02

(54) **Bördelvorrichtung**
Hemming device
Dispositif de rabattage

(30) Priorität: 14.05.1996 DE 19619561
(43) Veröffentlichungstag der Anmeldung: 16.05.2001
(62) Teilanmeldung aus: 97923875.5
(73) Patentinhaber: Volkswagen AG, 38436 Wolfsburg (DE)
(72) Erfinder: Niewöhner, Heino, 38110 Braunschweig (DE)
(74) Vertreter: Fritz, Edmund Lothar, Dipl.-Chem.

(56) Entgegenhaltungen:
- DE-A- 3 640 941
- GB-A- 2 165 193

## Beschreibung

Die vorliegende Erfindung betrifft eine Bördelvorrichtung mit mehreren Abkantbacken, die horizontal in Richtung auf und von einem Randbereich eines Bleches versetzbar sind und die je mindestens eine Bördelkante aufweisen, gegen die der Randbereich des Bleches unter Umbördelung führbar ist sowie ein Verfahren zum Umbördeln eines Randbereichs eines Blechs.

Bei dieser Bördelvorrichtung sind so viele Abkantbacken mit entsprechenden Bördelkanten innerhalb eines Bereiches, über dem das Blech mit seiner Öffnung abgelegt wird, dass mindestens 300° der Öffnungsfläche (ausgehend von dem Schwerpunkt der Öffnungsfläche) bzw. mindestens vier Ecken bzw. mindestens 80 % des Randbereiches der Öffnung umgebördelt werden können. Vorzugsweise sind mehrere dieser Bedingungen, insbesondere alle erfüllt. Hierzu hat die Bördelvorrichtung insbesondere mindestens fünf und vorzugsweise acht oder sogar mehr Abkantbacken mit entsprechenden Bördelkanten, wobei die Abkantbacken, wie oben beschrieben, in mehreren Schüben, insbesondere zwei Schüben versetzbar sind. Die Abkantbacken können mehrere, insbesondere zwei bis vier Bördelkanten haben, die übereinander angeordnet sind und gegen die der umzubördelnde bzw. zu falzende Rand nacheinander führbar ist. Hierzu wird das Blech mit seiner Öffnung über die Abkantbacken gelegt, wobei der Randbereich der Öffnung vorzugsweise aus der Blechebene nach oben absteht; insbesondere in einem Winkel von 45° bis 90° (von der Öffnungsseite oder auch von der Blechseite her gemessen). Die Abkantbacken werden anschließend zuerst mit den Eckenabkantbacken und dann mit den Geradabkantbacken auf den Randbereich der Öffnung zugeschoben, dann wird der Arbeitstisch mit dem Blech angehoben und ein Vorbördeln an entsprechend ausgebildeten ersten Bördelkanten der Abkantbacken durchgeführt. Die Abkantbacken fahren anschließend zurück (in entgegengesetzter Reihenfolge), der Tisch wird etwas höher gefahren (oder auch tiefer, je nach Anordnung der ersten Abkantbacken) und die Abkantbacken werden, wie beschreiben, wieder auf den Randbereich verschoben. Dann erfolgt wieder ein Anheben des Arbeitstisches unter einer weiteren Bördelung bzw. Falzung des Randbereiches des Bleches. Dies kann gewünschtenfalls wiederholt werden. Das Versetzen der Abkantbacken erfolgt vorteilhaft, wie oben beschrieben, mittels einer Drehverstellung. Ebenso enthält die Vorrichtung vorzugsweise oben beschriebene Details.

Außer der Vorrichtung gehört noch ein Verfahren gemäß Anspruch 8 zur Erfindung. Dieses Verfahren beinhaltet als wesentliche Ausgestaltung das Versetzen mehrerer Abkantbacken, die Bördelkanten aufweisen, in der horizontalen Ebene einer Blechöffnung und anschließendes Hinführen des Randes der Öffnung an die Bördelkanten der Abkantbacken, wobei der Randbereich der Öffnung über mindestens 300°, bezogen auf den Schwerpunkt der Öffnungsfläche undloder über mindestens vier Eckbereiche und/oder über mindestens 80 % des Randbereiches der Öffnung umgebördelt wird.

Die Erfindung wird im folgenden anhand eines Ausführungsbeispiels unter Bezugnahme auf die beiliegenden Zeichnungen näher beschrieben.

Es zeigen:
- Figur 1: einen Ausschnitt eines Kraftfahrzeugdaches mit Verstärkungsrahmen für ein Schiebedach;
- Figur 2: den Randbereich der Öffnung und des Rahmens im Schnitt;
- Figur 3: eine Abkantbacke mit drei Bördelkanten;
- Figur 4: die Anordnung der einzelnen Abkantbacken in der Dachöffnung; und
- Figur 5: eine Abkantbacke mit einer Bördelkante.

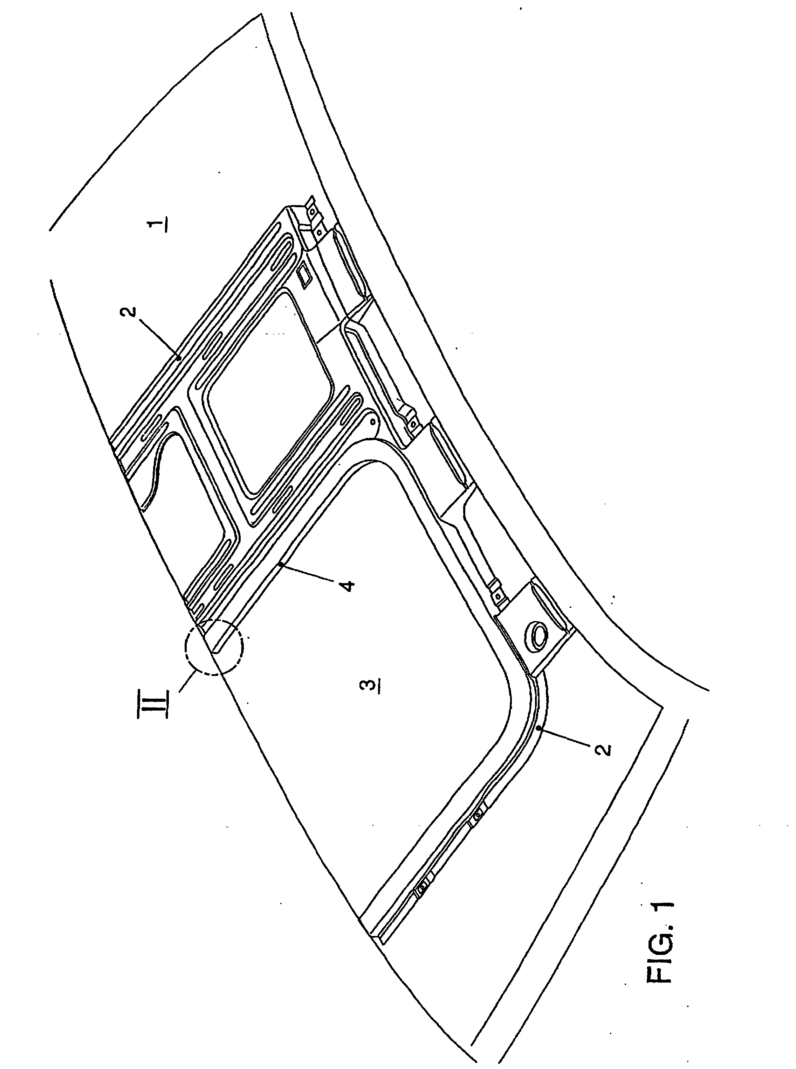

In Figur 1 ist ein geformtes Dachblech 1 (in Teildarstellung) dargestellt mit einem aufgelegten Verstärkungsrahmen 2, der eine Schiebeausstelldachöffnung 3 umgibt. Der Verstärkungsrahmen 2 ist einerseits durch Verklebung und andererseits durch einen um die gesamte Öffnung 3 umlaufenden Falzflansch 4 mit dem Dach 1 verbunden.

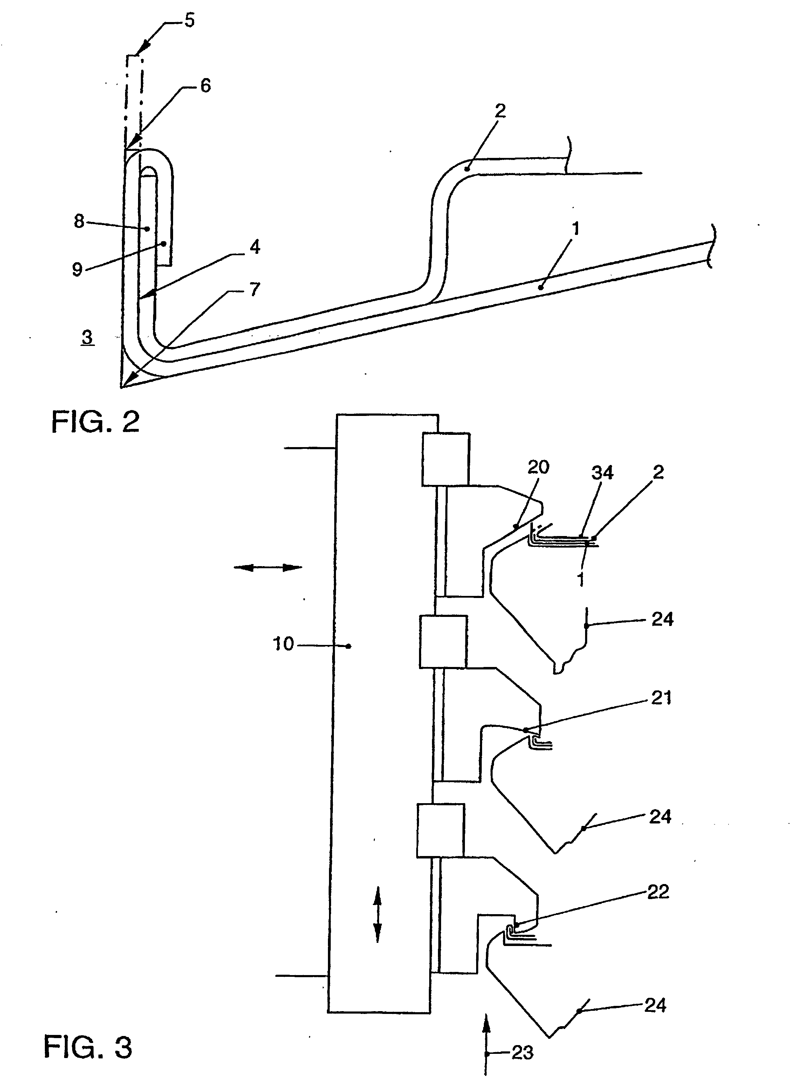

Ein Ausschnitt II des Falzflansches 4 ist in Figur 2 im Schnitt näher dargestellt. Wie bei 5 gestrichelt angedeutet, steht im ursprünglichen Zustand vor dem Falzen das Dachblech 1 im Bereich der Öffnung 3 über wenige Zentimeter als Bördelrand 6 ab. Der Bördelrand 6 steht in einem Winkel 7 von ca. 85° zur Ebene des Dachblechs 1 und ist zur Innenseite hin gerichtet. Der Bördelrand 6 dient außerdem zur Zentrierung des Verstärkungsrahmens 2, der unter anderem im Bereich des Bördelrandes 6 unter Zwischenlage einer Klebstoffschicht mit diesem verbunden wird. Nach dem Aufsetzen des Verstärkungsrahmens 2 über den Bördelrand 6 wird der überstehende Teil 5 des Bördelrandes 6 in einer Falzvorrichtung in mehreren Schritten über den Randbereich 8 des Verstärkungsrahmens 2 gefalzt 9.

Das Falzen erfolgt, wie in Figur 3 dargestellt, dreistufig an Abkantbacken 10 (bis 19), wobei jede Abkantbacke drei Bördelkanten 20 bis 22 enthält. Für einen sauberen Bördelvorgang hält ein Füllschieber 34 gegen den Randbereich 8. Die erste Bördelkante 20 dient dem Vorbördeln des überstehenden Dachrandes 5, die zweite Bördelkante 21 dient einem weiteren Vorbördeln und die Bördelkante 22 dem Fertigbördeln, wobei, wie mit dem Pfeil 23 dargestellt, das Dach mit dem Verstärkungsrahmen auf einem Falz- bzw. Bördelbett 24 liegend der Reihe nach den Bördelkanten 20 bis 22 zugeführt wird. Zwischen den einzelnen Bördelvorgängen wird die Abkantbacke 10 vor- und zurückgeschoben (Doppelpfeil).

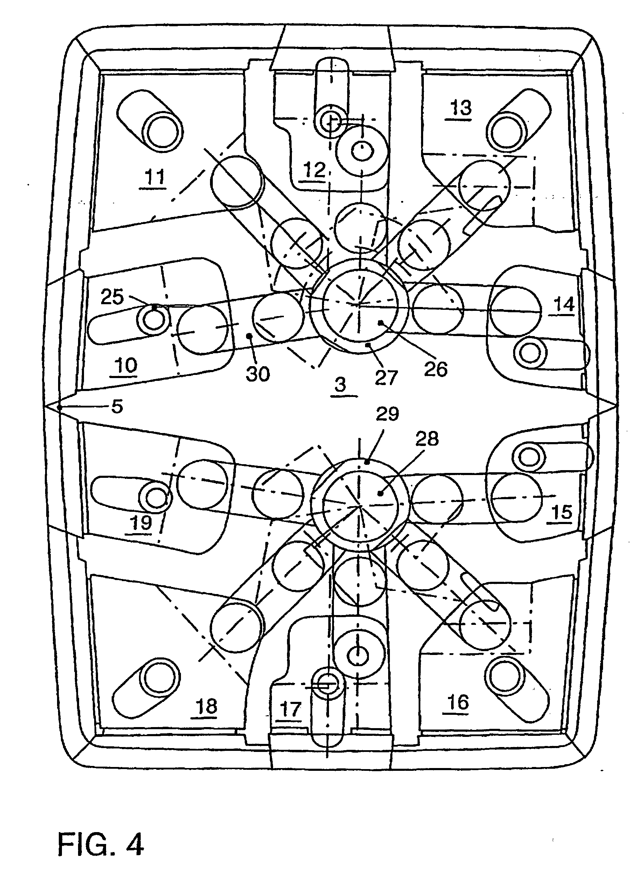

In Figur 4 ist die Anordnung der Abkantbacken 10 bis 19 in Draufsicht dargestellt, angeordnet in der Schiebedachöffnung 3. Die Abkantbacken 10 bis 19 sind als Schieber ausgebildet, die von Stiftführungen 25 geführt sind. Die Verstellung der Abkantbacken 10 bis 19 erfolgt über insgesamt vier Drehantriebe 26 bis 29, von denen immer zwei (26 und 27) bzw. (28 und 29) konzentrisch angeordnet sind. Die Abkantbacken 10, 12 und 14 sind über Mitnehmer 30 mit dem Drehantrieb 26 verbunden, die Abkantbacken 11 und 13 gleichermaßen mit dem Drehantrieb 27. Gleiches gilt für die Abkantbacken 15 bis 19. Aus der dargestellten Position werden die Abkantbacken 10, 12 und 14 durch Verdrehen des Drehantriebs 26 zurückgezogen, so daß die Abkantbacken 11 und 13 in ihren Seitenbereichen freiliegen und anschließend durch Drehen des Drehantriebs 27 ebenfalls zurückgezogen werden können. Hierdurch wird der Randbereich 6 der Öffnung 3 freigegeben, so daß das Dach entweder zu anderen Bördelkanten (21, 22) zugeführt bzw. der Vorrichtung entnommen werden kann.

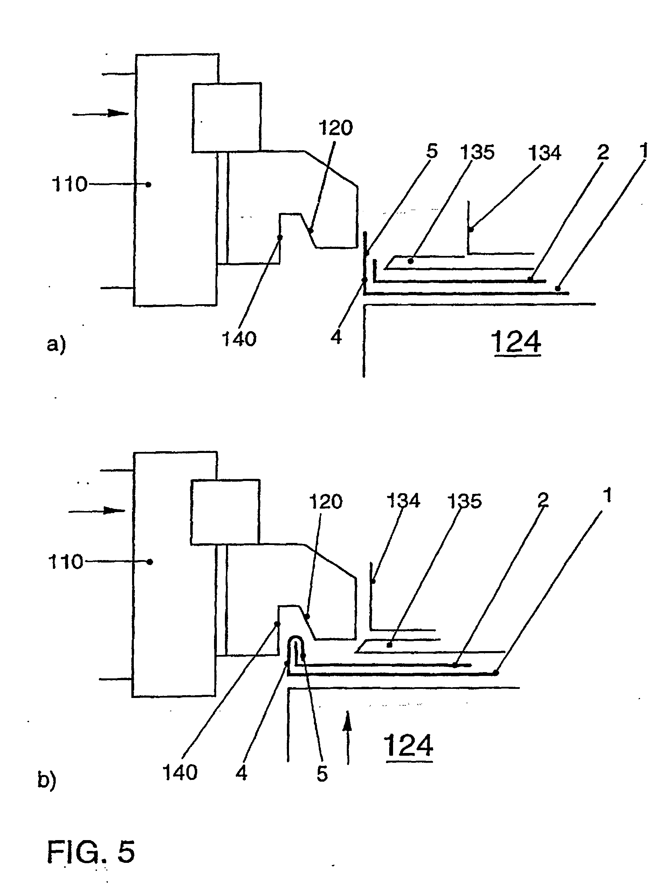

In der Figur 5 ist ein Falzvorgang dargestellt, der mit nur einer Bördelkante 120 auskommt. Bei diesem Verfahren fährt die Abkantbacke 110 zuerst mit der Bördelkante 120 gegen den umzubördelnden Kantenbereich 5 des Bleches 1, das auf einem Falz- bzw. Bördelbett 124 liegt. Über dem Blech 1 liegt der Hilfsrahmen 2, der von einem Niederhalter 134 gegen das Bördelbett 124 gepreßt wird. Aus dem Niederhalter 134 ist ein Füllschieber 135 ausgefahren, der den unteren Bereich des umzubördelnden Randbereiches 4 abstützt. Durch Verschieben der Abkantbacke 110 in Pfeilrichtung wird der obere Bereich 5 des umzubördelnden Randbereiches 4 in einem Winkel von ca. 90° in Richtung auf den Füllschieber 135 umgebördelt, wobei der Randbereich 4 bis zu einem Spalt 140 der Bördelkante 120 gelangt. Gleichzeitig fährt hierzu der Füllschieber 135 in den Niederhalter 134 zurück. Anschließend fährt das Bördelbett 124 (Pfeil in Figur 5b) nach oben, wodurch der umzubördelnde obere Randbereich 5 über den Hilfsrahmen 2 gefalzt wird. Die Abstützung des Randbereiches 4 kann auch durch einen (ggf. getrennt verfahrbaren) Teil des Bördelbettes 124 erfolgen.

Gegenüber den bisher verwendeten Falzpressen hat die erfindungsgemäße Falzvorrichtung den Vorteil eines deutlich geringeren Platzbedarfes, da mit einer Vorrichtung mehrstufig gearbeitet werden kann. Gleichzeitig benötigt die Falzvorrichtung bzw. das Verfahren kein Sonderfundament, wie sie für Falzpressen üblich sind, hierdurch ist die Falzvorrichtung auch nicht ortsgebunden. Hierdurch sind insgesamt niedrigere Entstehungskosten möglich.

## Patentansprüche

1. Bördelvorrichtung mit mehreren Abkantbacken (10-19), die horizontal in Richtung auf und von einem Randbereich eines Bleches versetzbar sind und die je mindestens eine Bördelkante (20-22) aufweisen, ***zur Umbördelung des Randbereichs des Bleches,* dadurch gekennzeichnet, dass** die Abkantbacken (10-19) mit ihren Bördelkanten (20-22) nach außen gerichtet zueinander angeordnet sind, so dass sie in einer Öffnung des Bleches aufnehmbar sind, deren Randbereich der umzubördelnde Randbereich ist, und dass sich die Bördelkanten (20-22) der Abkantbacken (10-19) über mindestens 300°, bezogen auf den Schwerpunkt der Öffnungsfläche, und/oder um mindestens vier Ecken und/oder über mindestens 80 % des Randbereiches der Öffnung erstrecken.

2. Bördelvorrichung nach Anspruch 1, **dadurch gekennzeichnet, dass** das Umbördeln bis zur Falzung erfolgt.

3. Bördelvorrichtung nach Anspruch 1 oder 2, **dadurch gekennzeichnet, dass** mindestens fünf Abkantbacken (10-19) vorgesehen sind.

4. Bördelvorrichtung nach einem der Ansprüche 1 bis 3, **dadurch gekennzeichnet, dass** die Abkantbacken (10-19) in zwei oder drei Schüben einzelner Abkantbacken versetzbar sind.

5. Bördelvorrichtung nach einem der Ansprüche 1 bis 4, **dadurch gekennzeichnet, dass** einer oder mehrere bis alle Abkantbacken (10-19) mehrere, insbesondere zwei oder drei Bördelkanten (20-22) aufweisen, gegen die der Randbereich des Bleches nacheinander unter Vor- und Fertigbördeln führbar ist.

6. Bördelvorrichtung nach einem der Ansprüche 1 bis 5, **dadurch gekennzeichnet, dass** die Abkantbacken (10-19) Eckenabkantbacken für Eckbereiche der Öffnung und mindestens einen Geradabkantbacken für gerade Abschnitte der Öffnung beinhalten, und dass der Geradabkantbacken beim horizontalen Versetzen der Abkantbacken nach den Eckenabkantbacken in Richtung auf und vor den Eckenabkantbacken von dem Randbereich der Öffnung versetzbar ist.

7. Bördelvorrichtung nach einem der Ansprüche 1 bis 6, **dadurch gekennzeichnet, dass** die Abkantbacken (10-19) mittels einer Drehverstellung in der Öffnung oder direkt mittels einer hydraulisch betriebenen Kolben-Zylinder-Einheit versetzbar sind.

8. Verfahren zum Umbördeln eines Randbereiches eines Bleches mit den Schritten:
- Versetzen mehrerer Abkantbacken (10-19), die Bördelkanten (20-22) aufweisen, in der horizontalen Ebene des Bleches in Richtung auf den Randbereich;
- ***Führen*** des Bleches mit seinem Randbereich gegen die Bördelkanten (20-22), wobei der Randbereich des Bleches umgebördelt wird;
- Zurücksetzen der Abkantbacken (10-19) in der horizontalen Ebene des Bleches, **dadurch gekennzeichnet, dass** die Abkantbacken (10-19) mit ihren Bördelkanten (20-22) nach außen gerichtet in Richtung auf den Randbereich, der eine Öffnung bildet, versetzt werden, und dass mittels der Bördelkanten (20-22) der Randbereich der Öffnung über mindestens 300°, bezogen auf den Schwerpunkt der Öffnungsfläche, und/oder um mindestens vier Ecken und/oder über mindestens 80 % des Randbereiches der Öffnung umgebördelt wird.

## Claims

1. Flanging device having a plurality of bending jaws (10-19) which can be displaced horizontally towards and away from a border region of a metal sheet and which in each case have at least one flanging edge (20-22), *for flanging the border region of the metal sheet,* **characterized in that** the bending jaws (10-19) are arranged with respect to one another with their flanging edges (20-22) directed outwards, so that they can be received in an opening in the metal sheet, the border region of which is the border region to be flanged, and **in that** the flanging edges (20-22) of the bending jaws (10-19) extend over at least 300°, with reference to the centre of gravity of the opening surface, and/or about at least four corners and/or over at least 80% of the border region of the opening.

2. Flanging device according to Claim 1, **characterized in that** the flanging takes place until the fold is produced.

3. Flanging device according to claim 1 or 2, **characterized in that** at least five bending jaws (10-19) are provided.

4. Flanging device according to one of Claims 1 to 3, **characterized in that** the bending jaws (10-19) can be displaced in two or three batches of individual bending jaws.

5. Flanging device according to one of Claims 1 to 4, **characterized in that** one or more to all of the bending jaws (10-19) have a plurality of, in particular two or three, flanging edges (20-22) against which the border region of the metal sheet can be guided successively with preliminary flanging and final flanging taking place.

6. Flanging device according to one of Claims 1 to 5, **characterized in that** the bending jaws (10-19) include corner bending jaws for corner regions of the opening and at least one straight bending jaw for straight sections of the opening, and **in that** when the bending jaws are displaced horizontally, the straight bending jaws can be displaced after the corner bending jaws away from the border region of the opening towards and in front of the corner bending jaws.

7. Flanging device according to one of Claims 1 to 6, **characterized in that** the bending jaws (10-19) can be displaced by means of a rotational adjustment in the opening or directly by means of a hydraulically operated piston/cylinder unit.

8. Method for flanging a border region of a metal sheet, having the following steps:
- displacement of a plurality of bending jaws (10-19), which have flanging edges (20-22), towards the border region in the horizontal plane of the metal sheet;
- *guiding* of the metal sheet by its border region against the flanging edges (20-22), the border region of the metal sheet being flanged;
- replacing the bending jaws (10-19) in the horizontal plane of the metal sheet,
**characterized in that** the bending jaws (10-19) are displaced, with their flanging edges (20-22) directed outwards, in the direction of the border region which forms an opening, and **in that** the flanging edges (20-22) are used to flange the border region of the opening over at least 300°, with respect to the centre of gravity of the opening surface, and/or about at least four corners and/or over at least 80% of the border region of the opening.

## Revendications

1. Dispositif de rabattage comprenant plusieurs mors de pliage (10-19) qui peuvent être décalés dans la direction d'une zone de bord d'une tôle et depuis celle-ci, et qui présentent chacun au moins une arête de bordage (20-22), pour le **rabattage de la zone de bord de la tôle, caractérisé en ce que** les mors de pliage (10-19) sont disposés mutuellement avec leurs arêtes de bordage (20-22) orientées vers l'extérieur, de sorte qu'ils puissent être reçus dans une ouverture de la tôle dont la zone de bord est la zone de bord à rabattre, et **en ce que** les arêtes de bordage (20-22) des mors de pliage (10-19) s'étendent sur au moins 300°, par rapport au centre de gravité de la surface d'ouverture, et/ou autour d'au moins quatre coins et/ou sur au moins 80% de la zone de bord de l'ouverture.

2. Dispositif de rabattage selon la revendication 1, **caractérisé en ce que** ce rabattage s'effectue jusqu'au pliage.

3. Dispositif de rabattage selon la revendication 1 ou 2, **caractérisé en ce qu'**au moins cinq mors de pliage (10-19) sont prévus.

4. Dispositif de rabattage selon l'une quelconque des revendications 1 à 3, **caractérisé en ce que** les mors de pliage (10-19) peuvent être décalés en deux ou trois avances de mors de pliage individuels.

5. Dispositif de rabattage selon l'une quelconque des revendications 1 à 4, **caractérisé en ce qu'**un ou plusieurs, voire la totalité des mors de pliage (10-19) présentent plusieurs, en particulier deux ou trois arêtes de bordage (20-22), contre lesquelles la zone de bord de la tôle peut être guidée successivement en réalisant un rabattage préalable et un rabattage final.

6. Dispositif de rabattage selon l'une quelconque des revendications 1 à 5, **caractérisé en ce que** les mors de pliage (10-19) comportent des mors de pliage en coin pour les zones de coin de l'ouverture et au moins un mors de pliage droit pour des portions droites de l'ouverture, et **en ce que** le mors de pliage droit peut être décalé, lors du décalage horizontal des mors de pliage après les mors de pliage en coin, dans la direction des mors de pliage en coin et avant ceux-ci depuis la zone de bord de l'ouverture.

7. Dispositif de rabattage selon l'une quelconque des revendications 1 à 6, **caractérisé en ce que** les mors de pliage (10-19) peuvent être décalés au moyen d'un réglage rotatif dans l'ouverture ou directement au moyen d'une unité cylindre-piston hydraulique.

8. Procédé pour le rabattage d'une zone de bord d'une tôle, comprenant les étapes suivantes :
- décaler plusieurs mors de pliage (10-19) qui présentent des arêtes de bordage (20-22), dans le plan horizontal de la tôle, dans la direction de la zone de bord ;
- guider la tôle avec sa zone de bord contre les arêtes de bordage (20-22), la zone de bord de la tôle étant ainsi rabattue ;
- ramener les mors de pliage (10-19) dans le plan horizontal de la tôle,
**caractérisé en ce que** les mors de pliage (10-19) sont décalés, avec leurs arêtes de bordage (20-22) orientées vers l'extérieur dans la direction de la zone de bord qui forme une ouverture, et **en ce qu'**au moyen des arêtes de bordage (20-22), la zone de bord de l'ouverture est rabattue sur au moins 300°, par rapport au centre de gravité de la surface de l'ouverture, et/ou autour d'au moins quatre coins et/ou sur au moins 80% de la zone de bord de l'ouverture.
